Europäisches Patentamt

European Patent Office

Office européen des brevets

(11) Numéro de publication: **0 001 369**
A1

## (12) DEMANDE DE BREVET EUROPEEN

(21) Numéro de dépôt: 78400113.3

(22) Date de dépôt: 26.09.78

(51) Int. Cl.²: **B 30 B 9/04**
C 10 B 53/00

(30) Priorité: 26.09.77 FR 7729617

(43) Date de publication de la demande:
04.04.79 Bulletin 79/7

(84) Etats contractants désignés:
BE DE GB NL SE

(71) Demandeur: Société Anonyme "Moteurs Duvant"
9, rue Henri Caffiaux
F-59308 VALENCIENNES(FR)

(72) Inventeur: Colson, Achille
67, rue Emmanuel Rey
F-59300 Valenciennes(FR)

(74) Mandataire: Lemoine, Jean
Cabinet Lemoine Abreveta 145, rue du Molinel
F-59800 Lille(FR)

(54) **Presse essoreuse continue de boue et installation de production d'énergie l'utilisant.**

(57) La présente invention concerne une presse essoreuse continue de boue contenant des déchets industriels combustibles. Elle concerne aussi l'installation de production d'énergie dans laquelle s'intègre ladite presse.

La presse est caractérisée par la combinaison:

a) d'un tambour 7, contenant des cylindres 27 dans lesquels se déplacent alternativement des pistons 40,

b) d'un distributeur 4 de boue,

c) d'un bouclier 57 hémi-cylindrique fixe, concentrique au tambour, couvrant celui-ci et les ouvertures des cylindres depuis le distributeur 4 de boue jusqu'à une station d'éjection 58,

d) d'un moyen 26 de déplacement alternatif des pistons,

e) d'un transporteur 8 de pastilles ou galettes 9 de boue essorée hors de la presse.

Application à la récupération de boue combustible en fabrique de pâte à papier notamment.

Fig. 1

1

## Presse essoreuse continue de boue et installation de production d'énergie l'utilisant.

La présente invention concerne une presse essoreuse continue de boue contenant des déchets agricoles et industriels combustibles, ladite presse se composant d'un tambour tournant autour d'un axe horizontal et comprenant des cylindres radiaux débouchant à la périphérie, cylindres dans lesquels se déplacent alternativement des pistons actionnés cycliquement à la fréquence de rotation du tambour, la boue à essorer étant introduite à la partie supérieure du tambour dans une zone de remplissage au moment où, dans les cylindres, les pistons dégagent le volume maximum des cylindres, lesdits pistons se déplaçant ensuite de façon centrifuge pour presser la boue contre un bouclier hemi-cylindrique fixe, concentrique au tambour, couvrant celuici et les ouvertures périphériques des cylindres depuis la fin de la zone de remplissage jusqu'à la zone d'éjection dans la partie basse du tambour, la presse comportant encore des moyens assurant le déplacement des pistons. L'invention concerne aussi l'installation de production d'énergie dans laquelle s'intègre ladite presse.

Certaines industries sont gênées par des boues résiduelles qui jusqu'à présent, résistent à tout traitement et sont re-

- 2 -

jetées en provoquant une pollution qui est de moins en moins tolérée. C'est le cas, notamment, de l'industrie papetière qui doit rejeter dans des bassins de décharge ou d'épandage, des quantités considérables de boues contenant jusqu'à 20 à 25 % de fibres, d'écorces et de buchettes combustibles qui, jusqu'à présent, faute de moyens appropriés, ne peuvent être utilisées rentablement pour la production d'énergie. En fait, ces boues contiennent couramment 60 à 90 % d'eau.

Les presses et séparateurs existants ne permettent pas d'obtenir en continu un produit d'une siccité suffisante pour en autoriser la manipulation et un séchage final exempt de frais importants ; par ailleurs l'eau étant nécessaire à la formation des galettes, il ne pouvait être question d'essorer ou de sécher la boue pour ensuite fabriquer des galettes ce qui exclut l'utilisation de la centrifugation.

Les galettes combustibles doivent pouvoir être stockées et avoir des dimensions bien définies pour permettre ne combustion et une gazéification optimum. Elles doivent posséder une cohésion suffisante pour ne pas s'effriter et produire des débris et poussières susceptibles d'altérer la circulation de l'air et des gaz dans les gazogènes.

Il fallait donc imaginer un dispositif comprenant un grand nombre de moyens d'essorage discontinu fonctionnant en succession pour réaliser une opération pratiquement continue. C'est le cas réalisé par la presse de l'invention appliquant pratiquement le procédé qui consiste à introduire une quantité déterminée et précise de boue dans un cylindre puis de la presser à l'aide d'un piston et maintenir la pression un

- 3 -

0001369

certain temps pour en exprimer l'eau et en recueillir une galette ou pastille de particules de matière combustible comprimées, de forme, poids et volume constants ne contenant plus qu'une faible quantité d'eau que l'on peut éliminer ensuite, pour l'essentiel, dans un séchoir, pour que les galettes ou pastilles puissent être utilisées convenablement comme combustible. Il fallait aussi produire ces pastilles ou galettes de manière régulière et les faire sortir régulièrement espacées de la machine de fabrication.

Dans l'état actuel de la technique, il existe des appareils permettant de presser de la matière humide pour en faire des cylindres, bâtons ou briquettes mais, d'une manière générale, ces appareils sont destinés à traiter des matières possédant une certaine cohésion et contenant moins d'eau que les boues d'industries papetières, par exemple des matières végétales à fibres longues comme de la tourbe ou des matières minérales plastiques. Dans le cas de la boue d'industries papetières, il faut presser l'ensemble et maintenir la pression un certain temps pendant que l'eau s'exprime et s'égoutte avant de relâcher cette pression lorsque la galette ou pastille est constituée. Si on ne procède pas de la manière qui vient d'être décrite, l'eau qui reste autour de la pastille ou galette, au moment où la pression est relâchée, est épongée par ladite galette et réincorporée dans celle-ci en nuisant à sa cohésion : la pastille ou galette expulsée se détériore ensuite.

Parmi les appareils existants, on peut citer essentiellement ceux décrits dans trois brevets.

Le brevet allemand GERCKE N° 5006 du 11 décembre 1877 prévoit un tambour tournant autour d'un axe horizontal avec des cylindres radiaux débouchant à la périphérie, cylindres dans lesquels se déplacent alternativement des pistons actionnés cycliquement à la fréquence de rotation du tambour. Les cylindres peuvent être prismatiques. Les pistons sont actionnés par des traverses comprenant des galets roulant sur des excentriques avec une course relativement importante surtout si l'on considère que les cylindres ont un petit alésage. Le remplissage des cylindres se fait par un boîtier recouvrant un quart supérieur de la périphérie du tambour compris entre un plan axial horizontal et un plan axial vertical. La compression de la matière se fait entre un bouclier situé après le boîtier de remplissage et se terminant un peu avant le plan axial horizontal du tambour, c'est-à-dire sur un cinquième de tour au maximum. L'éjection de la matière essorée a lieu immédiatement après l'horizontale et les bâtons secs tombent librement sur un plan incliné au bas duquel ils s'entassent.

Un premier inconvénient de ce dispositif est l'alimentation irrégulière par gravité au bas d'un simple boîtier, surtout si le diamètre des cylindres est faible par rapport à leur profondeur.

Un deuxième inconvénient est l'usage de pistons à longue course qui favorise l'usure et gêne l'expulsion de l'eau qui doit traverser une forte épaisseur de matière. Ce type de presse ne peut admettre que des produits ayant une humidité maximum de 12 à 15 %.

Un troisième inconvénient est l'usage de bielles, galets, etc ... qui compliquent la machinerie et engendrent une consommation d'énergie.

Un quatrième inconvénient, le plus important, est que la loi de déplacement du piston est fixée par l'excentrique et ne peut être adaptée à l'efficacité de l'essorage telle qu'on l'a indiqué ci-dessus. On ne peut maintenir comprimée la matière sur un certain temps pendant l'exprimage du liquide puis assurer une légère décompression. En fait, l'excentrique oblige à n'utiliser qu'un petit bouclier n'assurant la fonction d'essorage que sur une faible fraction de la périphérie du tambour, d'où une perte de rendement.

En outre, les bâtons secs se détériorent après pressage puisqu'ils défilent progressivement en pression à la bordure finale du bouclier en se déformant élastiquement sur toute leur longueur qui est soumise à des contraintes de cisaillement longitudinal provoquant un effritement de tout le bâton si celui-ci ne contient pas suffisamment de fibres longues maintenant la cohésion. Celle-ci est rompue finalement par les chocs au moment et après l'éjection.

Enfin, il faut signaler que lors de la constitution de bâtons, on emprisonne de la vapeur et de l'eau sous pression qui se vaporise et se détend à la sortie de la presse en faisant pratiquement exploser les bâtons constitués qui produisent des éclats et de la poussière.

Le brevet français ABRESCH N° 434 085 du 9 septembre 1911 prévoit deux bandes presseuses sans fin se déplaçant dans la même direction en se rapprochant progressivement et comportant des boîtes constituant des moules retenant les matières sèches mais laissant échapper le liquide. Les moules sont donc cons-

0001369

titués par six parois disjointes.

Cette constitution permet seulement de traiter des matières humides relativement consistantes, à longues fibres, par exemple. Elle ne permet pas la réalisation de pressions élevées assurant la siccité recherchée.

Certains des inconvénients signalés ci-dessus se retrouvent ici. Il s'agit de la décompression progressive le long d'une face de la briquette, y provoquant des tensions internes génératrices de destruction. Il s'agit aussi de la compression progressive suivie brutalement de la décompression au moment de l'éjection provoquant la réincorporation du liquide. Il s'agit aussi des chocs destructeurs à l'éjection et à l'évacuation.

Un autre inconvénient de cette presse est la disposition horizontale des cellules de compression, qui ne favorise pas l'élimination du liquide.

De même que précédemment, l'alimentation des cellules ainsi que l'évacuation des prismes essorés ne sont pas assurées régulièrement. Il faut signaler que l'écartement des cellules provoque une perte de matière dans le vide qui les sépare et le mauvais rendement de l'installation qui d'ailleurs se souille facilement.

Il faut enfin signaler la perte d'énergie et les usures qui apparaissent dans les axes, galets et diverses articulations.

Le brevet allemand 357 832 du 12 novembre 1919 décrit un dispositif similaire à celui du brevet français précédent à la différence qu'il y a trois bandes presseuses, la bande du milieu comportant des cylindres où la matière est placée, cylindres au fond desquels se déplace un piston actionné par des
rampes.

Les mêmes remarques peuvent être faites avec l'inconvénient
supplémentaire d'une complexité mécanique plus grande.

En bref, ces appareils ne peuvent convenir au traitement de
boues à forte teneur en eau contenant de fines particules combustibles comme les boues de l'industrie papetière, pour en
faire des galettes ou pastilles cohérentes ne risquant pas
de s'effriter pendant la fabrication, pendant le séchage et
pendant l'utilisation ultérieure dans un gazogène.

La présente invention est destinée à remédier à ces inconvénients.

La presse de l'invention est caractérisée principalement par
la combinaison :

a) d'un tambour dont les cylindres ont un alésage nettement
plus important que la course du piston,

b) d'un distributeur volumétrique de boue assurant un remplissage uniforme des cylindres à la partie supérieure du tambour,

c) d'un bouclier recouvrant le tambour sur au moins la demi-
circonférence de celui-ci entre le distributeur de boue jusqu'à la station d'éjection à la partie inférieure du tambour,
ledit bouclier comportant des moyens favorisant l'élimination
du liquide exprimé de la boue,

d) de moyens de déplacement des pistons suivant une loi que
l'on peut modifier facilement suivant la nature de la boue
et les besoins, cette loi de déplacement assurant

    1. le volume maximum des cylindres, c'est-à-dire le maintien des pistons près de l'axe, pendant toute la période de remplissage au niveau du distributeur,

2. une réduction rapide du volume des cylindres, c'est-à-dire une levée des pistons, pendant la première partie du passage des cylindres devant le bouclier,

3. un maintien du volume minimum, c'est-à-dire l'immobilisation des pistons en position haute, pendant une deuxième partie du passage des cylindres devant le bouclier,

4. une légère augmentation du volume des cylindres, c'est-à-dire un léger abaissement des pistons, pendant la toute dernière partie du passage des cylindres devant le bouclier,

5. une brusque levée des pistons au moment où les cylindres viennent de se dégager du bouclier pour éjecter les pastilles ou galettes essorées,

e) d'un transporteur de pastilles ou galettes essorées prenant celles-ci une à une le plus près possible du tambour dans la zone d'éjection de celui-ci la vitesse de déplacement de ce transporteur étant synchronisée avec celle du tambour et étant déterminée pour que les pastilles ou galettes soient séparées les unes des autres,

f) de moyens d'entraînement en rotation simultanée et synchronisée du tambour, du distributeur et du transporteur,

g) d'organes de sécurité contre les surcharges accidentelles et la protection corporelle.

Il est nécessaire que les pistons soient retenus dans les cylindres, en particulier par une butée limitant leur déplace-

- 9 -

0001369

ment centripète engendré par un ressort de rappel, tandis que lesdits pistons sont poussés vers l'extérieur par une came fixe, dont l'axe est concentrique au tambour, ladite came ayant un profil adapté pour assurer l'essorage optimum de la boue et éjecter la pastille ou galette de boue essorée, c'est-à- dire que ladite came présente un premier bossage relatif à la compression ou levée du piston, puis une partie concentrique relative au maintien de la compression contre le bouclier, dans la position haute du piston, puis un petit renfoncement, relatif à la légère décompression ou abaissement ou déplacement centripète du piston, puis un deuxième bossage à profil assurant une levée rapide ou déplacement centrifuge des pistons au moment de l'éjection, enfin un profond renfoncement, dans la position basse du piston préalable au remplissage des cylindres. Le cylindre comprend en outre des moyens destinés à éliminer l'eau d'essorage, notamment celle ayant pu passer entre piston et chemise, et des moyens de lubrification compatibles avec les infiltrations d'eau.

Suivant une forme préférée de réalisation, la partie des cylindres la plus éloignée de l'axe est emprisonnée dans au moins deux parois cylindrique du tambour, parois concentriques à celui-ci la paroi cylindrique la plus proche de l'axe constituant un tambour étanche avec les parois latérales du tambour en forme de disque, tandis que la partie du tambour située entre cette paroi cylindrique et la paroi cylindrique concentrique de plus grand diamètre constitue un espace annulaire creux communiquant avec l'extérieur du tambour par des trous percés dans les disques latéraux et par où peut s'éliminer l'eau d'essorage qui s'échappe des orifices ména-

0001369

gés dans les cylindres situés à cet endroit.

En général, on utilise un distributeur du type à moulinet, à pales radiales comprenant l'axe de rotation dans leur plan et on emploie un transporteur de pastilles du type à bande continue.

Le tambour comporte encore deux couronnes dentées d'entraînement actionnées par deux pignons moteurs qui animent aussi le transporteur tandis que le distributeur de boue est actionné par une roue dentée engrenant sur la couronne du tambour.

Dans une forme de réalisation, le bouclier comporte une paroi lisse sur laquelle frotte la boue comprimée par les cylindres, le frottement étant atténué par des bandes de glissement polies interchangeables. Par ailleurs, le bouclier est conçu de manière que l'eau d'essorage sortant des cylindres soit évacuée par des trous entre les bandes de glissement.

Dans une autre forme de réalisation, dans le cas d'efforts importants, le bouclier est constitué par une chenille hémicylindrique, garnie de plaques juxtaposées et soutenue par des galets, ladite chenille étant entraînée en rotation pour suivre exactement le mouvement de rotation du tambour.

Outre la presse essoreuse qui vient d'être définie, l'invention concerne aussi une installation de production d'énergie caractérisée par la combinaison de la presse qui vient d'être évoquée, presse qui produit des pastilles de boue essorée, avec :
a) un séchoir de pastilles utilisant les gaz d'échappement d'au moins un moteur diesel-gaz utilisant en combustible principal le gaz issu des galettes de boue produites par la presse ci-dessus décrite,

b) un gazogène utilisant les pastilles séchées par le séchoir et produisant un gaz combustible utilisable dans le ou les moteurs,

c) au moins un moteur diesel-gaz, utilisant le gaz du gazogène et produisant les gaz d'échappement pour le séchage et de l'énergie mécanique utilisable sous toutes formes.

On comprend que la presse de l'invention puisse être intégrée dans un complexe autonome de valorisation énergétique de déchets industriels combustibles. On a effectué des essais et des études dans lesquels on s'est aperçu que la presse permettait de produire, à partir de boues de fabriques de pâte à papier, des galettes homogènes d'une siccité de l'ordre de 45 à 55 %. Ces galettes sont ensuite séchées pour fournir du combustible gazéifiable utilisable dans les moteurs pour la production d'énergie électrique. Dans la suite du présent mémoire, on décrit un exemple pratique, non limitatif, de réalisation, d'une presse étudiée spécialement pour la récupération des boues de fabriques de pâtes à papier, leur traitement et leur séchage à raison d'une production d'une tonne par heure de produit gazéifiable d'une siccité de l'ordre de 75 à 80 %. Les galettes produites, après séchage final, correspondent à une production électrique de 1 000 KVA.

Il faut noter que le séchage des galettes à la sortie de presse et avant le gazogène, ne nécessite aucune dépense d'énergie puisque les calories nécessaires sont récupérées à l'échappement du groupe électrogène.

L'invention sera mieux comprise à l'aide de la description

- 12 -

0001369

suivante de la presse qui est illustrée par les dessins joints dans lesquels :

la figure 1 est une vue schématique, en coupe verticale, perpendiculairement à l'axe du tambour, de l'ensemble de la presse,

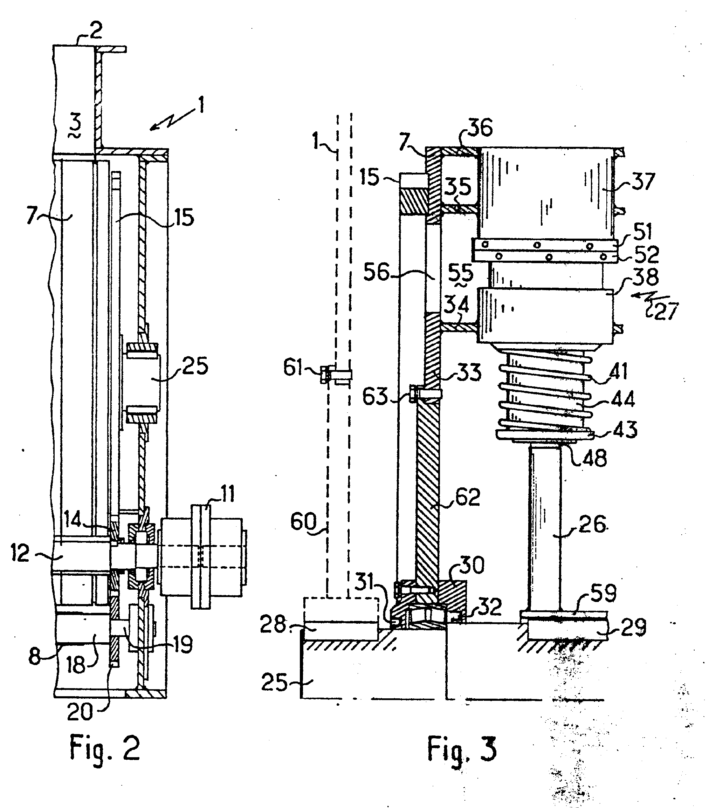

la figure 2 est une coupe verticale suivant A-A, de la figure 1,

la figure 3 est une coupe verticale suivant B-B, de la figure 1,

la figure 4 est une coupe verticale d'un cylindre de compression.

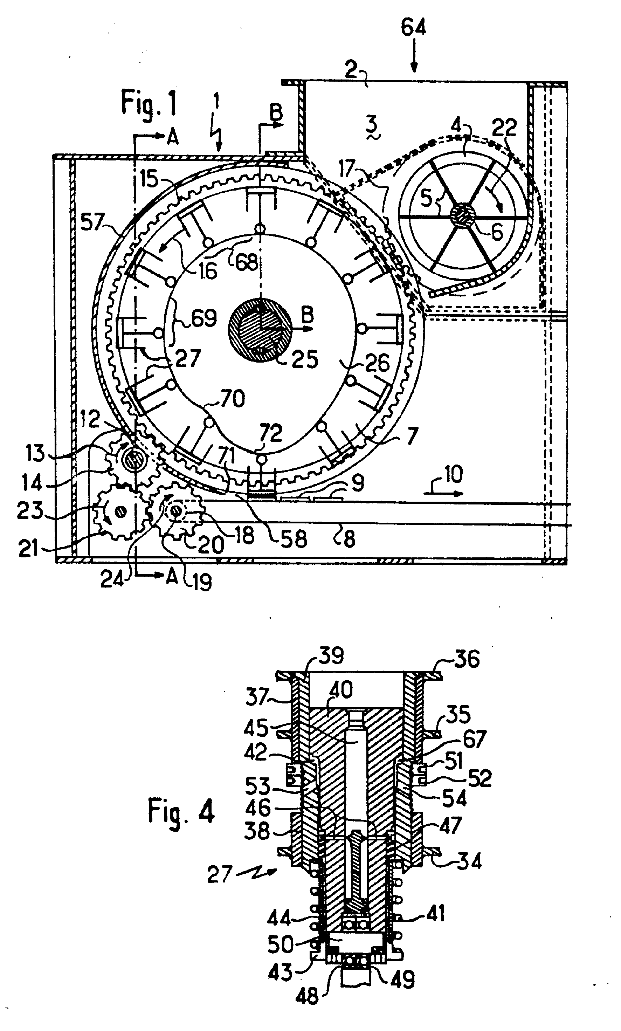

La presse, représentée globalement à la figure 1, se compose d'un bâti 1, largement dimensionné pour absorber les efforts de torsion et les efforts de compression comme on le verra ci-après. Le bâti 1 comporte un orifice 2 d'entrée des boues qui sont admises dans une trémie 3 de chargement qui comporte, à sa partie inférieure, une écluse d'alimentation 4 ou distributeur qui est ici du type à moulinet dont les pales radiales 5 comprennent l'axe 6 de rotation dans leur plan. La presse comporte encore un tambour à cylindres 7, alimenté par le distributeur 4, et un transporteur de pastilles de boue essorée 8 qui évacue les pastilles ou galettes 9 dans le sens de la flèche 10.

L'entraînement cinématique des divers éléments est assuré par un moteur électrique (non représenté), accouplé au manchon d'accouplement spécial 11 muni de doigts limiteurs de couple de sécurité qui fait tourner l'arbre 12 dans le sens de la flèche 13, arbre sur lequel sont calés deux pignons 14. Les pignons 14 entraînent directement les couronnes dentées 15

0001369

du tambour 7, qui tourne dans le sens de la flèche 16 et qui entraîne à son tour la roue 17 calée sur l'axe 6. Le transporteur 8 présente un tambour de tête 18 calé sur un axe 19 solidaire d'un pignon 20 entraîné par le pignon moteur 14 à l'aide d'un pignon intermédiaire 21. Les sens de rotation de ces divers éléments sont repérés par les flèches 22, 23, 24.

Le tambour à cylindres 7 tourne autour d'un axe fixe 25 sur lequel est calée, de manière à ne pas pouvoir tourner, une came 26 par rangée de cylindres 27. L'axe 25 est calé sur le bâti 1 par les clavettes 28 tandis que les cames 26 sont calées sur l'axe 25 par les clavettes 29. Le tambour 7 tourne sur l'axe 25 par l'intermédiaire de paliers d'appui 30 à roulements à galets. Le palier 30 comprend tous les moyens d'étanchéité nécessaires pour éviter l'introduction d'eau ; en particulier, on note des joints 31, 32. Le tambour 7 se compose de deux parois latérales telles que 33, en forme de disque, qui supportent des parois cylindriques 34, 35, 36, concentriques à l'axe 25 et qui sont soudées aux parois latérales 33. Les parois 34, 35, 36 sont percées de trous circulaires permettant le passage de douilles 37, 38 (figure 4) qui sont soudées auxdites parois 34, 35, 36 et qui permettent le logement des cylindres 27. En fait, les cylindres 27 sont constitués d'une chemise 39, d'un piston 40 et d'un ressort de rappel 41. La chemise 39 débouche à la périphérie du tambour 7, c'est-à-dire à la périphérie de la paroi 36. Le piston 40 est retenu dans le cylindre par un épaulement 42 limitant son déplacement lors de la mise en place de l'ensemble chemise 39 et piston 40 dans le cylindre 27. Le ressort 41 prend appui sur la base de la chemise 39 et sur une douille à collerette 43 solidaire du piston 40. Un guide cylindrique 44, solidaire de la douille 43 et donc du piston 40, maintient les spires du ressort 41 lors du mouvement alternatif du piston et assure l'étanchéïté du système de graissage du piston 40 et de la chemise 39. La partie centrale du piston 40 présente un évidement 45 que l'on peut remplir de lubrifiant qui est distribué entre piston 40 et chemise 39 par des mèches 46 et des segments spéciaux tels que 47. Le piston 40 est poussé par la came 26 par l'intermédiaire de galets qui sont constitués par des roulements à billes 48, 49 fixés sur un axe 50 situé à l'extrémité inférieure du piston 40.

La chemise 39 est amovible et s'engage dans les douilles 37 et 38 par l'extérieur du tambour 7. Elle est maintenue en place dans la douille 37 par un écrou 51 et un contreécrou 52 ; la chemise 39 présente évidemment un filetage à cet endroit. La chemise 39 est percée de trous 53, 54 qui débouchent dans l'espace annulaire creux 55 constitué entre la paroi cylindrique 34 et la paroi cylindrique 35 et qui communiquent avec l'extérieur du tambour par les trous 56 percés dans les parois latérales du disque 33. L'utilité des trous 53, 54 est de permettre l'évacuation de l'eau qui a pu pénétrer entre la chemise 39 et le piston 40 et qui s'accumule dans l'espace annulaire 67 où débouchent aussi les trous 53, 54.

Un organe essentiel de la presse de l'invention est le bouclier hémi-cylindrique 57, concentrique au tambour 7 et couvrant celui-ci et les ouvertures des cylindres 27 depuis le distributeur 4 de boues jusqu'à la station d'éjection 58 de pastilles ou galettes 9, à la partie inférieure du tambour 7, à proximité du transporteur 8. Le bouclier 57 présente une paroi lisse sur laquelle frotte la boue comprimée par les pistons 40. Ces parois lisses peuvent être constituées par un revêtement spécial en acier inoxydable ou chromé. On prévoit, de part et d'autre de ces bandes de glissement, des fentes ou trous d'élimination de l'eau exprimée par la pression du piston. Dans l'exemple réalisé et représenté, on prévoit trois rangées de douze cylindres ; par conséquent, il existe trois bandes de glissement correspondantes. Les trois cames 26 sont calées sur un même moyeu 59.

Le profil des cames 26 est prévu pour que les pistons 40 soient en position inférieure au moment où les cylindres se trouvent en face du distributeur 4. Puis le profil prévoit une remontée progressive des pistons 40 au fur et à mesure que les cylindres 27 se déplacent le long du bouclier 57. A cet effet, il existe un premier bossage 68. Pendant la deuxième partie de la rotation le long du bouclier 57, le mouvement des pistons 40 est stabilisé ; pour cela, les cames 26 présentent une portée concentrique 69 relative au maintien de la compression contre le bouclier 57. En face de l'extrémité inférieure du bouclier 57, les cames 26 présentent un petit renfoncement 70 déterminant un léger déplacement centripète des pistons 40 produisant une petite décompression pour le passage de la lisière 71 du bouclier 57. Puis les cames 26 présentent un deuxième bossage 72, plus accentué que le premier bossage 68, pour assurer une levée rapide ou déplacement rapide centrifuge des pistons 40 en comprimant les ressorts 41 et en produisant une impulsion vers l'extérieur au niveau de la station d'éjection 58 pour expulser les pastilles ou galettes 9 qui sont déposées cependant délicatement à plat sur le transporteur 8 car la station 58 se trouve précisément au point le plus bas du tambour 7, à l'endroit où les pastilles ou galettes 9 sont déjà à plat. Tous ces mouvements sont contrôlés par les cames 26. La loi de compression de la boue est donc déterminée avec précision par le profil des cames 26. Cette loi peut être modifiée en fonction de la qualité de la boue à traiter. Pour cela, il faut donc prévoir l'interchangeabilité des cames 26.

Pour changer les cames 26, on prévoit, dans le bâti 1, une porte mobile 60, fixée par les boulons 61, qui correspond à une trappe 62 prévue dans le tambour 7, trappe fermée par les vis 63. En retirant la porte 60 et la trappe 62, on peut faire coulisser le moyeu 59 et retirer les cames 26 pour les remplacer par un autre jeu adapté à la boue à traiter.

Une partie importante de l'énergie consommée par la presse est consacrée à la compression de la boue. Cependant, une grosse partie de l'énergie est utilisée à vaincre les efforts de frottement de la boue contre le bouclier hémi-cylindrique 57. Pour diminuer ce frottement, dans une autre forme de réalisation, le bouclier est constitué par une chenille hémi-cylindrique, de même forme que le bouclier 57, et qui est garnie de plaques juxtaposées. Cette chenille est soutenue par des galets comme il est habituel dans ce cas. Les orifices entre plaques de la chenille permettent l'évacuation de l'eau essorée.

Le fonctionnement de la presse est facile à comprendre.

La boue introduite en 2 (flèche 64) est répartie équitablement dans les cylindres 27 par le distributeur 4 à un moment où les pistons 40 sont à leur position inférieure. La rotation du tambour 7 entraîne chacun des cylindres 27 vers le bouclier 57 et, à ce moment là, la came 26 provoque la remontée progressive du piston 40 qui comprime la boue dans la chemise 39 et contre le bouclier 57. L'eau essorée est éliminée essentiellement le long du bouclier 57, une petite partie s'échappe entre le piston 40 et la chemise 39 ; elle est évacuée dans l'espace annulaire 67, par les trous 53, 54 dans l'espace annulaire 55 et les trous 56. Le mouvement de compression s'accentue lors de la rotation du tambour 7 puis est maintenu un certain temps ; dans la toute dernière partie du passage des cylindres devant le bouclier 57, on décomprime la boue. Après la sortie des cylindres du secteur couvert par le bouclier, les pistons sont poussés vers l'extérieur et les pastilles ou galettes 9 sont éjectées en fin de course sur le transporteur 8. Les pastilles 9 n'ont plus que 45 à 55 % d'humidité. Elles peuvent subir une opération de séchage ultérieur, notamment avec les gaz d'échappement d'un moteur à gaz qui est précisément alimenté par un gazogène utilisant lesdites pastilles ou galettes 9. Cette installation n'est pas représentée car elle est connue. La nouveauté consiste en sa combinaison avec la presse de l'invention qui vient d'être décrite.

Naturellement, des modifications de détails peuvent être apportées à la presse de l'invention sans que cela puisse la faire sortir du cadre de nouveauté exprimé dans les revendications qui suivent. En particulier, le distributeur, la disposition des cylindres et le transporteur d'évacuation peuvent être remplacés par des moyens équivalents sans que cela change l'esprit de l'invention. On n'a pas décrit les accessoires d'évacuation de liquide. Il faut toutefois signaler que la presse peut être installée sur une fosse de réception ou sur un caniveau d'écoulement destiné à cette évacuation. Ce liquide peut d'ailleurs être récupéré et réutilisé pour les besoins industriels.

La presse de l'invention, alliée à l'installation de production d'énergie, peut s'adapter à tout produit combustible contenu dans des boues. On obtient donc une récupération importante d'énergie et une élimination des déchets générateurs de pollution. On économise les frais importants provoqués par l'élimination sans profit ou un épandage de matières polluantes générateur de contraintes administratives et fiscales. L'énergie récupérée est très importante puisque la presse ne consomme qu'environ 5 % de l'énergie fournie par le moteur diésel-gaz.

- 1 -  0001369

Revendications de brevet

1°/ Presse essoreuse continue de boue contenant des déchets agricoles et industriels combustibles, ladite presse se composant d'un tambour tournant autour d'un axe horizontal et comprenant des cylindres radiaux débouchant à la périphérie, cylindres dans lesquels se déplacent alternativement des pistons actionnés cycliquement à la fréquence de rotation du tambour, la boue à essorer étant introduite à la partie supérieure du tambour dans une zone de remplissage au moment où, dans les cylindres, les pistons dégagent le volume maximum des cylindres, lesdits pistons se déplaçant ensuite de façon centrifuge pour presser la boue contre un bouclier hémicylindrique fixe, concentrique au tambour couvrant celui-ci et les ouvertures périphériques des cylindres depuis la fin de la zone de remplissage jusqu'à la zone d'éjection dans la partie basse du tambour, la presse comportant encore des moyens assurant le déplacement des pistons,
c a r a c t é r i s é e par la combinaison :
a) d'un tambour dont les cylindres ont un alésage nettement plus important que la course du piston,
b) d'un distributeur volumétrique de boue assurant un remplissage uniforme des cylindres à la partie supérieure du tambour,
c) d'un bouclier recouvrant le tambour sur au moins la demi-circonférence de celui-ci entre le distributeur de boue jusqu'à la station d'éjection à la partie inférieure du tambour, ledit bouclier comportant des moyens favorisant l'élimination du liquide exprimé de la boue,
d) de moyens de déplacement des pistons suivant une loi que l'on peut modifier facilement suivant la nature de la boue

- 2 -

0001369

et les besoins, cette loi de déplacement assurant

1. le volume maximum des cylindres, c'est-à-dire le maintien des pistons près de l'axe, pendant toute la période de remplissage au niveau du distributeur,

2. une réduction rapide du volume des cylindres, c'est-à-dire une levée des pistons, pendant la première partie du passage des cylindres devant le bouclier,

3. un maintien du volume minimum, c'est-à-dire l'immobilisation des pistons en position haute, pendant une deuxième partie du passage des cylindres devant le bouclier,

4. une légère augmentation du volume des cylindres, c'est-à-dire un léger abaissement des pistons, pendant la toute dernière partie du passage des cylindres devant le bouclier,

5. une brusque levée des pistons au moment où les cylindres viennent de se dégager du bouclier pour éjecter les pastilles ou galettes essorées,

e) d'un transporteur de pastilles ou galettes essorées prenant celles-ci une à une le plus près possible du tambour dans la zone d'éjection de celui-ci. la vitesse de déplacement de ce transporteur étant synchronisée avec celle du tambour et étant déterminée pour que les pastilles ou galettes soient séparées les unes des autres,

f) de moyens d'entraînement en rotation simultanée et synchronisée du tambour, du distributeur et du transporteur,

g) d'organes de sécurité contre les surcharges accidentelles et la protection corporelle.

2°/ Presse essoreuse, telle que définie dans la revendication 1, c a r a c t é r i s é e par le fait que les pistons sont retenus dans les cylindres par une butée de rappel limitant leur déplacement centripète engendré par un ressort de rappel, tandis qu'ils sont poussés vers l'extérieur par une came fixe, concentrique au tambour, ladite came ayant un profil adapté pour assurer l'essorage optimum de la boue et éjecter la pastille ou galette de boue essorée, c'est-à-dire que ladite came présente un premier bossage relatif à la compression ou levée du piston, puis une partie concentrique relative au maintien de la compression contre le bouclier, dans la position haute du piston, puis un petit renfoncement, relatif à la légère décompression ou abaissement ou déplacement centripète du piston, puis un deuxième bossage à profil assurant une levée rapide ou déplacement centrifuge des pistons au moment de l'éjection, enfin un profond renfoncement, dans la position basse du piston préalable au remplissage des cylindres.

3°/ Presse essoreuse, telle que définie dans la revendication 2, c a r a c t é r i s é e par le fait que le cylindre comprend des moyens pour éliminer l'eau d'essorage, notamment celle ayant pu passer entre piston et chemise, et des moyens de lubrification compatibles avec l'eau.

4°/ Presse essoreuse, telle que définie dans la revendication 3, c a r a c t é r i s é e par le fait que la partie des cylindres la plus éloignée de l'axe est emprisonnée dans au moins deux parois cylindriques du tambour, parois concentriques à celui-ci la paroi cylindrique la plus proche de l'axe constituant un tambour étanche avec les parois latérales du tambour en forme de disque, tandis que la partie du tambour située entre cette paroi cylindrique et la paroi cylindrique
concentrique de plus grand diamètre constitue un espace annulaire creux communiquant avec l'extérieur du tambour par
des trous percés dans les disques latéraux et par où peut
s'éliminer l'eau d'essorage qui s'échappe des orifices ménagés dans les cylindres situés à cet endroit.

5°/ Presse essoreuse, telle que définie dans l'une quelconque
des revendications précédentes, prise isolément, c a r a c
t é r i s é e par le fait que le distributeur est du type à
moulinet, à pales radiales comprenant l'axe de rotation dans
leur plan.

6°/ Presse essoreuse, telle que définie dans l'une quelconque
des revendications précédentes, prise isolément, c a r a c
t é r i s é e par le fait que le transporteur de pastilles
ou galettes est du type à bande continue.

7°/ Presse essoreuse, telle que définie dans l'une quelconque
des revendications 1 à 6, prise isolément, c a r a c t é r i
s é e par le fait que le tambour comporte au moins une couronne dentée d'entraînement actionnée par un pignon moteur
qui anime aussi le transporteur, tandis que le distributeur
de boue est actionné par une roue dentée engrenant sur la couronne du tambour.

8°/ Presse essoreuse, telle que définie dans l'une quelconque
des revendications 1 à 7, prise isolément, c a r a c t é r i
s é e par le fait que le bouclier comporte une paroi lisse
sur laquelle frotte la boue comprimée par les cylindres, le
frottement étant atténué par des bandes de glissement polies et l'eau étant évacuée par des trous entre les bandes de glissement.

9°/ Presse essoreuse, telle que définie dans l'une quelconque des revendications 1 à 7, prise isolément, c a r a c t é r i s é e par le fait que le bouclier est constitué par une chenille hémi-cylindrique, garnie de plaques juxtaposées et soutenue par des galets.

10°/ Installation de production d'énergie, c a r a c t é r i s é e par la combinaison de la presse définie dans l'une quelconque des revendications 1 à 9, prise isolément, produisant des pastilles où galettes de boue essorée, avec
a) un séchoir de pastilles utilisant les gaz d'échappement d'au moins un moteur à combustion interne,
b) un gazogène utilisant les pastilles séchées par le séchoir et produisant un gaz combustible utilisable dans le ou les moteurs,
c) au moins un moteur à gaz, utilisant le gaz du gazogène et produisant les gaz d'échappement pour le séchage et de l'énergie mécanique utilisable sous toutes formes.

Fig. 1

Fig. 4

0001369

Fig. 2

Fig. 3

0001369

Numéro de la demande

**Office européen**
**des brevets**

## RAPPORT DE RECHERCHE EUROPEENNE

EP 78 40 0113

| Catégorie | Citation du document avec indication, en cas de besoin, des parties pertinentes | Revendication concernée | CLASSEMENT DE LA DEMANDE (Int. Cl.²) |
|---|---|---|---|
| | **DOCUMENTS CONSIDERES COMME PERTINENTS** | | |
| A,D | DE - C - 5006 (GERCKE) <br> * Ensemble du brevet * <br> -- | 1,2,7, 8 | B 30 B  9/04 <br> C 10 B 53/00 |
| A,D | FR - A - 434 085 (ARBRESCH) <br> * Page 2, ligne 20 - page 3, ligne 4; figures 5-7 * <br> -- | 1,9 | |
| A,D | DE - C - 357 832 (GES. FUER MA-SCHINELLE DRUCKENTWAESSERUNG) <br> * Page 2, lignes 48-90; figure * <br> -- | 1,9 | |
| A | DE - C - 377 648 (BIRK) <br> * Ensemble du brevet * <br> -- | 1 | **DOMAINES TECHNIQUES RECHERCHES (Int. Cl.²)** <br><br> B 30 B <br> F 02 G <br> F 02 B <br> D 21 C |
| A | FR - A - 616 666 (REGRAFFE) <br> * Ensemble du brevet * <br> -- | 1 | |
| A | FR - A - 324 407 (ESTLANDER) <br> * Ensemble du brevet * <br> -- | 1,9 | |
| A | FR - A - 937 317 (SAHUT, CONREUR) <br> * Ensemble du brevet * <br> -- | 1,6,8, 9 | **CATEGORIE DES DOCUMENTS CITES** |
| A | DE - A - 2 510 465 (SULZBERGER) <br> * Revendication 1 * <br> ---- | 10 | X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |

&: membre de la même famille, document correspondant

Le présent rapport de recherche a été établi pour toutes les revendications

| Lieu de la recherche | Date d'achèvement de la recherche | Examinateur |
|---|---|---|
| La Haye | 13-12-1978 | BOLLEN |

OEB Form 1503.1   06.78